Europäisches Patentamt

European Patent Office

Office européen des brevets

(19)

(11) **EP 1 112 871 B1**

(12) **EUROPEAN PATENT SPECIFICATION**

(45) Date of publication and mention
of the grant of the patent:
**24.09.2003 Bulletin 2003/39**

(51) Int Cl.7: **B60H 1/00**

(21) Application number: **00311065.7**

(22) Date of filing: **12.12.2000**

(54) **Method of preventing windshield fogging by determining windshield fog boundary humidity**

Verfahren zur Vermeidung des Beschlagens der Windschutzscheibe durch Bestimmung der hierfür erforderlichen Grenzfeuchtigkeit

Méthode pour éviter que le pare-brise se couvre de buée au moyen de la détermination de l'humidité relative limite

(84) Designated Contracting States:
**DE FR GB**

(30) Priority: **23.12.1999 US 472084**

(43) Date of publication of application:
**04.07.2001 Bulletin 2001/27**

(73) Proprietor: **Visteon Global Technologies, Inc.
Dearborn, Michigan 48126 (US)**

(72) Inventors:
 • **Davis, Leighton Ira
 Ann Arbor, Michigan 48104 (US)**
 • **Hoeschele, John David
 Detroit, Michigan 48228-4816 (US)**

 • **Dage, Gerhard Allen
 Franklin, Michigan 48025 (US)**

(74) Representative: **Gemmell, Peter Alan, Dr. et al
 Dummett Copp,
 25 The Square,
 Martlesham Heath
 Ipswich, Suffolk, IP5 3SL (GB)**

(56) References cited:
 **DE-A- 3 836 559         US-A- 4 852 363
 US-A- 5 467 605         US-A- 5 934 987**

 • **PATENT ABSTRACTS OF JAPAN vol. 014, no.
 209 (M-0968), 27 April 1990 (1990-04-27) & JP 02
 045219 A (NISSAN MOTOR CO LTD), 15 February
 1990 (1990-02-15)**

**Description**

## BACKGROUND OF THE INVENTION

### 1. Field of the Invention

The present invention relates generally to methods of controlling a heating, ventilating and air conditioning (HVAC) system of a vehicle and, more specifically, to a method of determining the windshield fog boundary for a HVAC system in a vehicle using a humidity sensor.

### 2. Description of the Related Art

It is known that a fundamental goal of a HVAC system for a vehicle is to detect and avoid windshield/window fogging conditions. In an attempt to measure and control the many variables that affect fogging, modern HVAC systems have many sensors and control actuators. A typical HVAC system might have a temperature sensor inside an occupant compartment or cabin of the vehicle, one measuring ambient temperature outside and others measuring various temperatures of the HVAC system internal workings. The occupant may have some input to the HVAC system via a set point or other adjustment. Additional sensors measuring sun heating load, humidity, etc. might be available to the HVAC system. The set of actuators might include a variable speed blower, some means for varying air temperature - including cooling and thereby extracting moisture from the air, ducting and doors to control the direction of air flow and the ratio of fresh intake air to recirculated air.

It is known how to provide a method and control system for controlling the HVAC system to prevent fogging. Such a method and control system is disclosed in U.S. Patent No. 5,516,041 to Davis, Jr. et. al.. In this patent, the method and control system uses fuzzy logic to prevent fogging. The control system responds to signals generated by various climate control sensors including a humidity sensor to produce a desired vehicle air temperature and air flow to detect and avoid incipient windshield/window fog conditions. Fuzzy logic and calculations are performed based on fuzzy rules and membership functions to provide nonlinear compensation. The fog boundary is mapped out empirically. US 4 852 363 discloses a method of controlling an HVAC system in which a threshold humidity is determined and if the vehicle humidity exceeds this threshold then action is taken to de-humidify the vehicle. Similarly, if the vehicle humidity falls below the threshold then humidifying equipment is activated.

It is desirable to provide a method for determining the windshield fog boundary so that the appropriate climate control system actions can be taken to avoid windshield fogging or misting. It is also desirable to provide a method for determining the windshield fog boundary wherein the fog boundary is expressed as a theoretical model based function. It is further desirable to provide a method for determining the windshield fog boundary during transient thermal conditions. It is further desirable to provide a method for determining the windshield fog boundary during particular conditions, such as rain or high speed, that make fogging more likely. It is still further desirable to provide a method for determining the proximity of current conditions to the windshield fog boundary using a humidity sensor so that actions to avoid fogging may be taken. Therefore, there is a need in the art to provide a method for determining the windshield fog boundary that accomplishes these desires.

According to an aspect of the present invention there is provided a method of preventing windshield fogging by automatically controlling a heating, ventilation and air conditioning (HVAC) system of a vehicle, said method comprising the steps of: determining a windshield parameter for the vehicle; determining a temperature difference between the vehicle cabin temperature and ambient temperature; measuring a relative humidity for incipient fogging in response to the windshield parameter and the temperature difference; determining the vehicle cabin relative humidity; determining a value of fogging probability between 0% and a maximum value based on the difference between the vehicle cabin relative humidity and the relative humidity for incipient fogging; selecting and determining one or more anti-fogging actions to be taken based on the value of the fogging probability; and controlling the HVAC system to perform the determined one or more anti-fogging actions. The step of determining the windshield parameter may comprise determining the windshield parameter as a function of vehicle speed, time, and rain occurring. The step of determining the function of rain occurring may be based on a signal from a rain sensor or a wiper motor for a predetermined period of time. The step of determining the relative humidity for incipient fogging comprises calculating relative humidity for incipient fogging based on the windshield parameter ($F_w$) and temperature difference ($T_{in}$- $T_{amb}$) The step of calculating the relative humidity for incipient fogging may comprise the equation rhbd = 100 - $h^{-1}$ [(1- $F_w$) ($T_{in}$ - $T_{amb}$)]. The windshield parameter ($F_w$) may be constant. The step of determining the anti-fog actions may comprise one or more of: determining whether to adjust blower speed, turn on the air conditioning, change an air distribution mode, adjust a fresh/recirculation air door, or add heat.

One advantage of the present invention is that a method of determining windshield fog boundary using a humidity sensor is provided based on a theoretical expression of a boundary between windshield fogging and no fog conditions. Another advantage of the present invention is that the method, in using a theoretical expression of the boundary based on a physical model, separates vehicle-specific properties from a relationship that expresses the nonlinear dependence of fog boundary variables on the properties of moist air. Yet another advantage of the present invention is that the method greatly simplifies the process of calibration of an auto-demist strategy and the parameterization of that calibration. Still another advantage of the present invention is that the method determines the windshield fog or mist boundary during transient thermal conditions. A further advantage of the present invention is that the method alters climate control actions during transient thermal conditions to avoid windshield fogging. Yet a further advantage of the present invention is that the method alters climate control actions with vehicle speed or upon detecting rain conditions to avoid windshield fogging.

Other features and advantages of the present invention will be readily appreciated as the same becomes better understood after reading the subsequent description taken in conjunction with the accompanying drawings.

BRIEF DESCRIPTION OF THE DRAWINGS

FIG. 1 is a diagrammatic view of a heating, ventilating, air conditioning (HVAC) system which can be controlled by a method, according to the present invention, of determining windshield fogging for the HVAC system.

FIG. 2 is a schematic block diagram of a control system used to carry out a method, according to the present invention, of determining windshield fogging for the HVAC system of FIG. 1.

FIG. 3 is a diagrammatic view of the temperature gradients across a windshield of a vehicle for a method, according to the present invention, of determining windshield fogging for the HVAC system of FIG. 1.

FIG. 4 is a graph of g for various interior temperatures for a method, according to the present invention, of determining windshield fogging for the HVAC system of FIG. 1.

FIG. 5 is a graph of the fog boundary for various fractions $F_w$ for a method, according to the present invention, of determining windshield fogging for the HVAC system of FIG. 1.

FIG. 6 is a graph of fog probability versus cabin relative humidity for a method, according to the present invention, of determining windshield fogging for the HVAC system of FIG. 1.

FIG. 7 is a graph of transient depression of the fog boundary for a method, according to the present invention, of determining windshield fogging for the HVAC system of FIG. 1.

FIG. 8 is a graph of a function for the $F_w$ transient for a method, according to the present invention, of determining windshield fogging for the HVAC system of FIG. 1.

FIG. 9 is a graph of $F_w$ versus vehicle speed for a method, according to the present invention, of determining windshield fogging for the HVAC system of FIG. 1.

FIG. 10 is a flowchart of a method, according to the present invention, of determining windshield fogging for the HVAC system of FIG. 1.

FIG. 11 is a flowchart of calculations, elaborating on steps 102 through 108 of FIG. 10, for the method, according to the present invention, of automatically controlling fogging for the HVAC system of FIG. 1.

DESCRIPTION OF THE PREFERRED EMBODINENT (S)

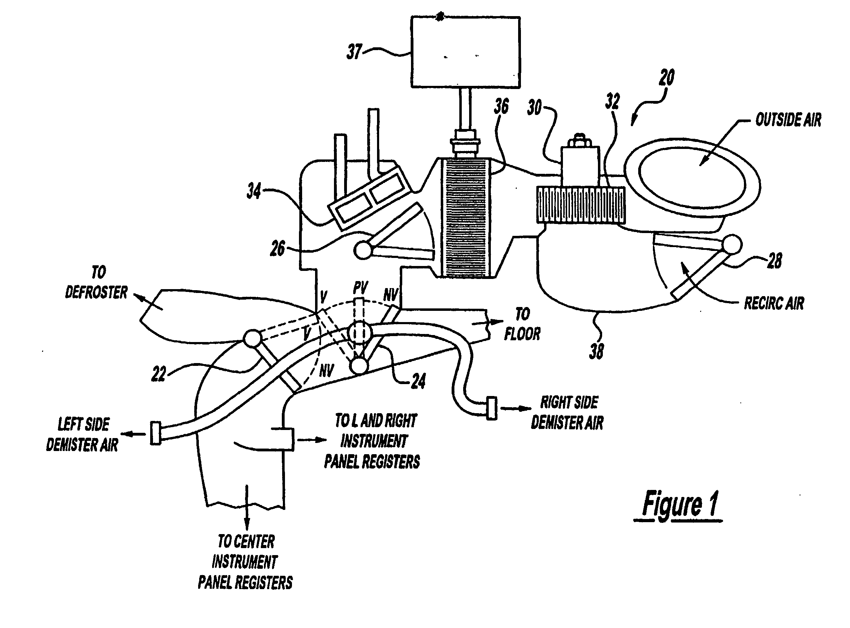

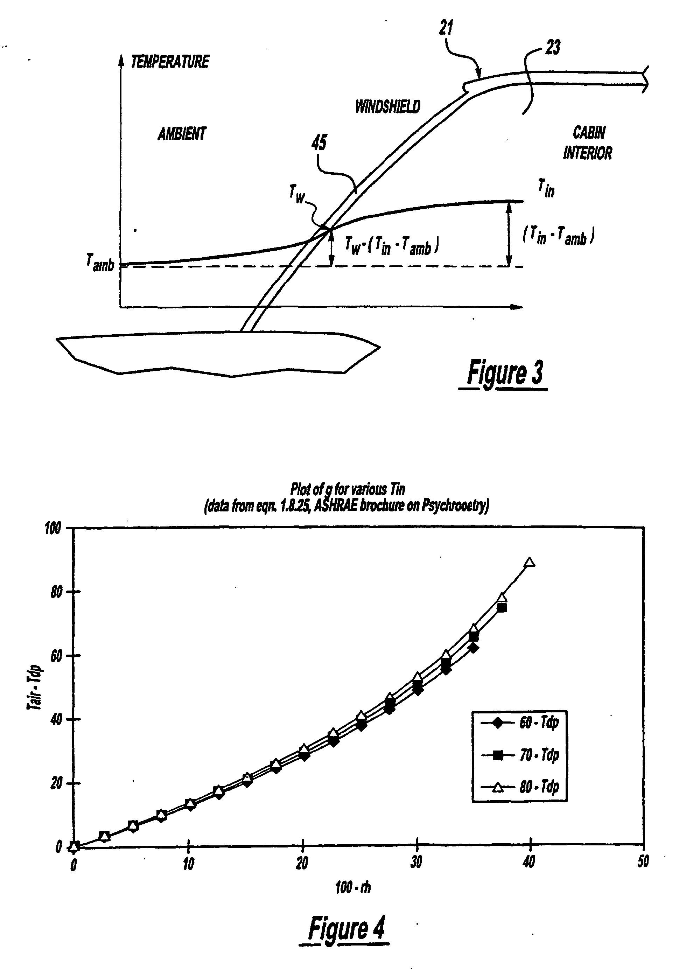

Referring to the drawings and in particular FIGS. 1 and 3, one embodiment of an air handling system of a heating, ventilation and air conditioning (HVAC) system 20 for a vehicle, generally indicated at 21, is illustrated. In general, control of air temperature and air flow (and, to a lesser extent, humidity) within the vehicle 21 is accomplished using various actuators to affect the temperature and flow of air supplied to a cabin or occupant compartment 23 of the vehicle 21. The HVAC system 20 includes an arrangement of air flow doors, including panel-defrost, floor-panel, temperature blend and outside recirculated air actuators or doors 22, 24, 26 and 28, respectively. The doors 22 and 24 are preferably driven by vacuum motors (not shown) between their various vacuum, partial vacuum and no vacuum positions in a conventional manner as illustrated in FIG. 1. The door 26 is driven by an electric servomotor (not shown) also in a conventional manner. The door 28 may also be driven by an electric servomotor so that the position of the door 28 is continuously variable.

The HVAC system 20 also includes a variable speed blower motor or fan 30 including a blower wheel 32. The HVAC system 20 includes heating and cooling elements such as a heater core 34 and an evaporator core 36 in a typical vehicle air conditioning plant including a compressor 37. Each of the above components is in communication with the HVAC case and associated ducting 38 in order to control temperature, the direction of air flow and the ratio of fresh or intake air to recirculated air.

For automatic control of the temperature and flow of air in the cabin 23, conditions within and outside the cabin 23 are monitored by sensors and an electronic controller 40 to be described generates signals to control the plant actuators according to the conditions as indicated by the sensors. The evaporator temperature is controlled in a conventional automatic fashion to allow the HVAC system 20 to dehumidify air moving thereover.

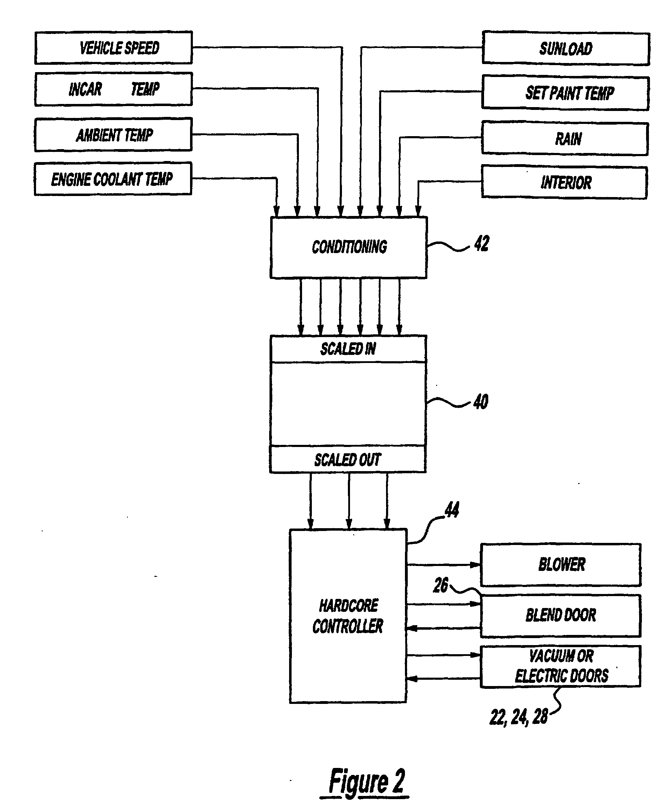

As illustrated in FIG. 2, a typical complement of sensors of the HVAC system 20 provide signals which are representative of interior air temperature (in-car), ambient (outside) air temperature, engine coolant temperature (ECT), vehicle speed (VS), rain intensity, humidity and sunload. In addition, there is a set signal or set temperature value indicating the desired temperature that is set manually by the operator of the vehicle 21.

The signals are provided to an electronic controller 40 as inputs after being conditioned by a conditioning circuit 42. The electronic controller 40 scales the input signals and provides scaled output signals for use by a hardware controller 44 which, in turn, controls the doors 22 through 28 and the blower 32 to regulate the temperature and flow of air and ultimately to prevent fogging of a window pane or windshield 45 of the vehicle 21. Blend door position is fed back to the hardware controller 44 as indicated by a return arrow. The hardware controller 44 also receives signals from the ignition switch (not shown) and the HVAC system 20 to indicate the operating of the switch and the HVAC system 20. The hardware controller 44 preferably continually monitors the state of the ignition switch and the state of the HVAC system 20. It should-be appreciated that the HVAC system 20 is similar to that disclosed in U.S. Patent No. 5,516,041 to Davis, Jr. et al..

The method and system of the present invention involves the combination of a humidity sensor and information processing, suitable for use by the electronic controller 40. Humidity information from the humidity sensor, in combination with information already available to the electronic controller 40 (cabin temperature, ambient temperature, blower speed, etc.) allows the calculation of a degree of likelihood of windshield/window fogging of the windshield 45.

A fog boundary defines the transition from conditions not likely to produce fog (misting) on the windshield 45 to those (worst case) conditions that will most likely lead to fogging. The fog boundary is mapped as a curve that gives relative humidity (rh) for incipient fogging as a function of cabin temperature and ambient temperature. Below the fog boundary, fogging of the window or windshield 45 is unlikely. At or just above the fog boundary, fogging is likely to occur under worst case conditions. Well above the boundary, fogging will prevail except perhaps for those portions of the windshield 45 where air movement is high. A variable called fog probability ($P_{fog}$) is defined to be zero well away from the fog boundary, starts to rise as the humidity comes within some distance of the fog boundary and equals 100% as the fog boundary is crossed (it is allowed to go further to some maximum value to allow continued increase in action in cases of extreme fogging).

Referring to FIG. 3, $T_{in}$ is the temperature in the cabin interior 23, $T_w$ is the temperature at the inside surface of the windshield 45 and $T_{amb}$ is the ambient temperature.

The fog boundary is given as an equation, expressing the inside relative humidity for incipient fog conditions as a function of a single variable, $T_{in} - T_{amb}$, and a single parameter, $F_w$. $F_w$ is defined in terms of the windshield interior surface temperature $T_w$ as follows:

$$T_w = T_{amb} + F_w(T_{in} - T_{amb}) \qquad (1)$$

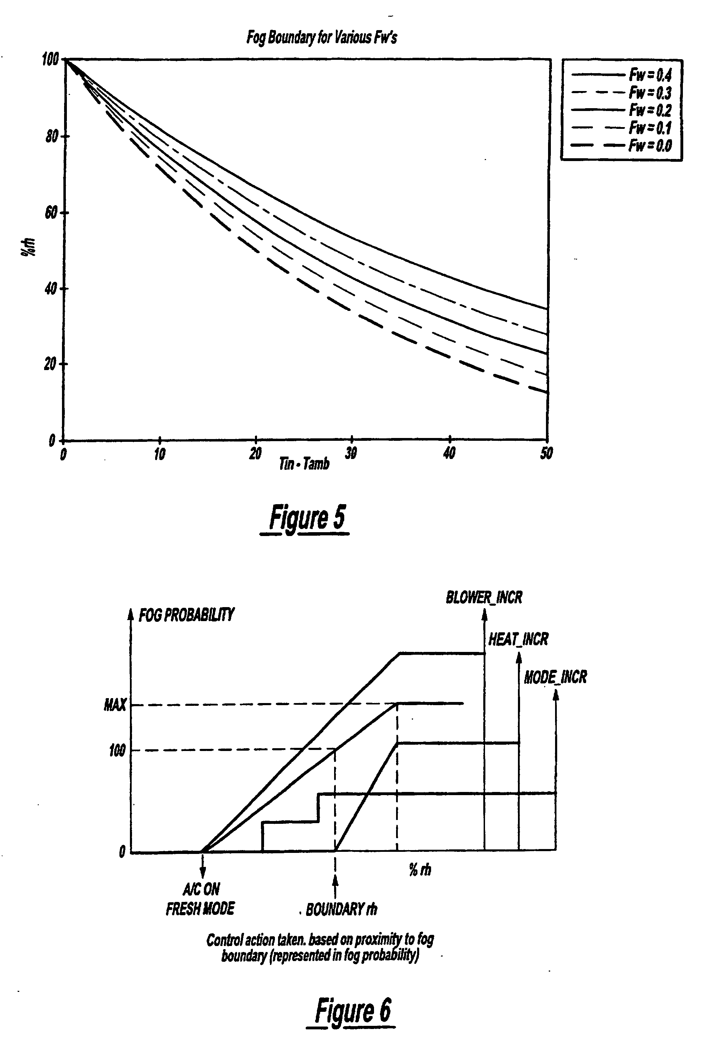

$T_w$ is expressed as the ambient temperature ($T_{amb}$) plus a fraction, $F_w$, of the difference between the inside or interior temperature ($T_{in}$) and the outside or ambient temperature, $T_{in} - T_{amb}$. The parameter $F_w$ may be determined in the absence of humidity measurements or any fogging, the only provision being that the windshield inner surface temperature $T_w$ should be measured under what would, the presence of humidity aside, be worst case fogging conditions. Plots of the fog boundary for various values of $F_w$ are shown in FIG. 5.

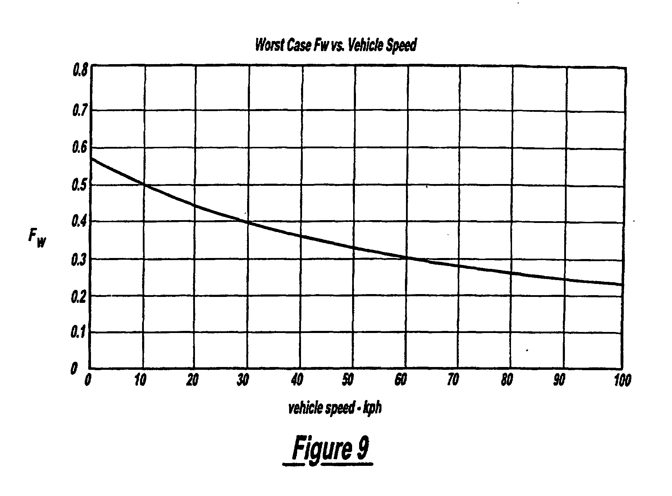

For simple stategies, it may be sufficient to determine $F_w$ as a constant. For more complicated strategies, if needed, $F_w$ may be determined as a function of other variables such as vehicle speed as illustrated in FIG. 9. Whether to include such additional functionality depends on the amount of variation of the windshield inner surface temperature with the variable in question and corresponding uncertainty in the position of the fog boundary. This uncertainty leads to a tradeoff between unanticipated fogging and the risk of taking unneeded anti-fog actions.

For incipient fog to occur, $T_w$ must be equal to the dew point of the air adjacent to the windshield 45, which in worst case is the same as the dew point of the air in the cabin 23,

$$T_w = T_{dp} = f(T_{in}, rh_{in}) \qquad (2)$$

which in turn is related to the inside temperature ($T_{in}$) and humidity ($rh_{in}$). In general, the two dimensional mapping given by $f(T_{in}, rh_{in})$ is somewhat complicated, but may be simplified by noting that $T_{dp}$ and $T_{in}$ coincide at 100% relative humidity, by definition. To rearrange the expression, subtract $T_{dp}$ from $T_{in}$ and cast f in terms of $100 - rh_{in}$, yielding a different function, g as follows:

$$T_{in} - T_{dp} = g(T_{in}, 100 - rh_{in}) \qquad (3)$$

As a result of this rearrangement, the series of curves of $T_{in} - T_{dp}$ vs. $100 - rh_{in}$ converge at the origin as illustrated in FIG. 4. The variation of these curves with $T_{in}$ is not great, especially considering that $T_{in}$ will be near room temperature most of the time. This relationship may be approximated with one curve, of one variable, as follows:

$$T_{in} - T_{dp} = h(100 - rh_{in}) \qquad (4)$$

wherein h is monotonic, thus there is no problem inverting it, at least in principle to yield:

$$100 - rh_{in} = h^{-1}(T_{in} - T_{dp}) \qquad (5)$$

Recalling that for incipient fogging, $T_w = T_{dp}$, substituting equation (1) into equation (5) yields:

$$100 - rh_{in} = h^{-1} [T_{in} - T_{amb} - F_w(T_{in} - T_{amb})]$$

or

$$rh_{in} = 100 - h^{-1}[ (1- F_w) (T_{in} - T_{amb})] \qquad (6)$$

This equation, assuming $h^{-1}$ can be found, gives the inside relative humidity for incipient fog conditions under worst case conditions; that is, it gives the incipient fog boundary curve discussed above. It should be appreciated that equation (6) is a great simplification in that the humidity is a function of a single variable, $T_{in}$-$T_{amb}$.

It should also be appreciated that the function $h^{-1}$ relates to the properties of moist air only and the properties of the vehicle 21 are subsumed into a single parameter, $F_w$. This parameter $F_w$ may be determined in the absence of humidity measurements or any fogging, the only provision being that the windshield inner surface temperature $T_w$ should be measured under what would be worst case fogging conditions as discussed above.

The above discussion of the theoretical fog boundary considers only windshield fogging for steady-state conditions. However, this strategy can be adapted in a simple manner to certain transient situations. Consider the situation of just starting up after the vehicle 21 has sat long enough for the windshield temperature to come to ambient temperature. The windshield 45 will remain at ambient temperature for a period of time until the adjacent air has warmed and the thermal inertia of the windshield 45 has been overcome. This is equivalent to saying that $F_w$ starts at zero and then increases as the cabin interior 23 warms up. After a suitable time, the boundary layer gradients on either side of the windshield 45 will be established and the steady-state fog boundary will be for the $F_w$ appropriate to that vehicle and existing conditions. The fog boundary may be computed during this transition by having the value of $F_w$ follow the warm-up transient of the windshield 45.

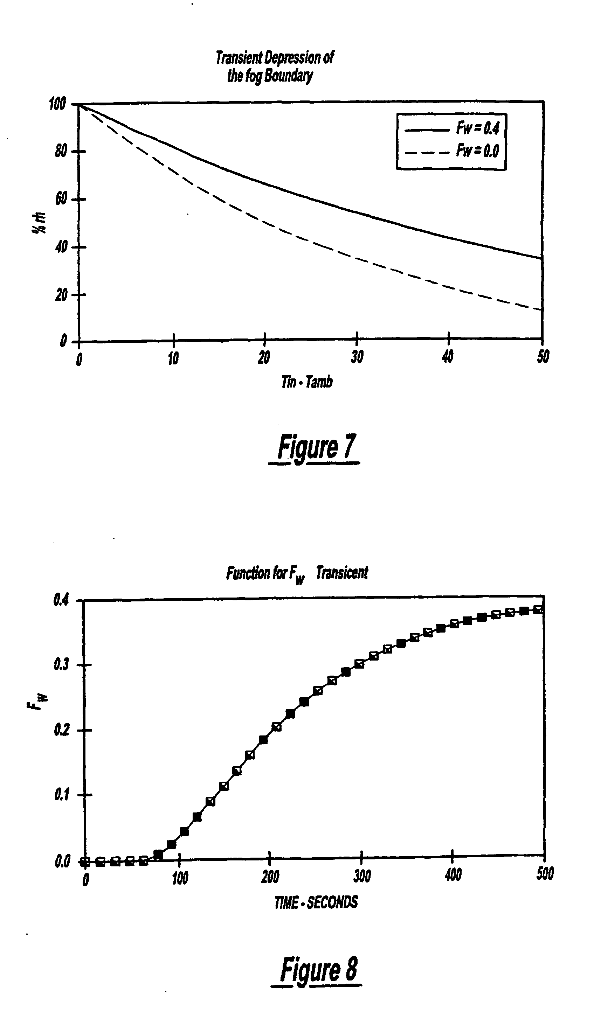

As illustrated in FIG. 7, the fog boundaries for $F_w = 0$ and $F_w = 0.4$ are shown. The strategy would proceed as usual, only using a transitory fog boundary corresponding to an $F_w$ ranging from zero to the appropriate steady-state value. The variation of $F_w$ with time should follow a delayed second-order transition, as the interior air must be warmed before the windshield 45 is affected. Such a time function is graphed in FIG. 8, with a time constant of 100 seconds and a delay of 45 seconds. The value of these parameters should be determined empirically for the vehicle type in question. It should be appreciated that the above time variation assumes the windshield 45 starts from ambient temperature $T_{amb}$. It should also be appreciated that a further refinement would allow for the windshield 45 not being at ambient temperature for short stops and would estimate the initial $F_w$ based on a key-off time maintained in the electronic controller 40. It should further be appreciated that, for the strategy to operate, the ambient temperature and cabin temperature and relative humidity sensors must read correctly during this transient period and the implied dew point of the cabin sensors must be representative of the air adjacent to the windshield 45.

The present invention also considers the implications of rain on the above-discussed anti-fog strategy based on the use of the cabin humidity sensor. Information that rain is occurring can be provided from a rain sensor directly or from a wiper signal continuing for a sufficient time that rain may be inferred. There are two inferences that can be made given the presence of rain: that the exterior humidity is undoubtedly higher than otherwise, e.g., within a certain range; and that the temperature of the windshield 45 is lower than usual. The effect of higher exterior humidity will be to raise interior humidity levels, but this effect will be followed by the humidity sensor and the proximity of measured relative humidity to the fog boundary will be accounted for by the strategy. Lower windshield temperatures, on the other hand, will entail modification of the strategy by changing the fog boundary.

The effect of rain on windshield fogging is not limited to merely indicating a higher ambient humidity. Raindrops penetrate the outer windshield boundary layer, directly affecting the heat transfer across the windshield 45. Additionally, the temperature of the raindrops is, in theory, less than that of the ambient air around them. Evaporation at the surface of the raindrops should cool them to the wet bulb temperature of the air they are falling through. This temperature depends on the humidity of the air, but for air at 50 °F and 75% rh, the wet bulb temperature is about 46 °F, four degrees cooler. It should be appreciated that many uncertainties involved in determining rain's cooling effect on the windshield 45, but a worst case estimate is that a driving rain might lower $T_w$ to the ambient air temperature, i.e., $F_w = 0$. In this case, the fog boundary would be given as the lowest curve in FIG. 5. An auto-demist strategy that calculates the fog boundary based on this parameter could easily adjust $F_w$ according to the intensity of rain as determined by a rain sensor or speed of wiper action.

The effect of the onset of rain will not result in an immediate change in $T_w$. The conduction of heat away from the windshield 45 and the heat capacity of the windshield 45 must be taken into account. A simple, first-order model of these effects gives:

$$C_w \frac{dT_w}{dt} + (h_D + h_{in})T_w = h_D T_D + h_{in} T_{in} \qquad (7)$$

where $C_w$ is the heat capacity per unit area of the windshield 45, hD is the thermal conductance of a raindrop to the windshield 45, $h_{in}$ is the thermal conductance of the interior boundary layer, $T_{in}$ and $T_D$ are the temperatures of the cabin interior 23 and the temperature effect of a raindrop, respectively. The time constant of a step change $T_D$ would be $C_w(h_D + h_{in})$. The steady-state solution to this equation is as follows:

$$Tw = \frac{h_D T_D + h_{in} T_{in}}{h_D + h_{in}} \qquad (8)$$

which in turn should give the dependence of $F_w$ on effective rain temperature. These equations are given simply as a guide to the form of the windshield temperature response. Given the uncertainties of scaling rain effects and the necessity of calibrating the temperature effect to the output of the rain sensor, the time constant and steady-state behavior are determined empirically. It should be appreciated that combining the transient behavior with the steady-state gives an adequate model for the depression of $F_w$ from the effects of rain and that the fog boundary from this model can then be used to determine anti-fog control actions to be taken as described below.

Given the ability to detect incipient fog conditions, and a measure of the degree or likelihood of fogging via fog probability, a strategy may be established for avoiding these conditions by taking appropriate control action. As fog probability increases, the speed of the blower 32 is increased proportionally. At some low threshold, the air conditioning (A/C) clutch (not shown) is turned on, if it is not already; likewise, the fresh/recirculation door 28 is put in fresh mode. At an intermediate fog probability, for example 50%, the air distribution mode is changed to put more discharge air on the windshield 45. If the current mode is floor, floor/defrost mode is chosen; if the current mode is floor/defrost or any other, defrost mode is chosen. At a high threshold of fog probability, for example 90%, the defrost air distribution mode is chosen exclusively. The use of increased blower and more windshield-directed modes can be quite effective for alleviating windshield fog without affecting comfort. However, above 100% fog probability, the blower 32 continues to ramp up strongly and heat is added to the strategy.

As illustrated in FIG. 6, fog probability as a function of proximity of relative humidity (rh) to the fog boundary along with control actions taken to modify the strategy is shown. Blower_incr and Heat_incr are variables added to the blower speed and system heat, respectively. Mode_incr bumps the air distribution to modes more directed at the windshield 45. The point at which the A/C clutch and fresh mode is assured is also indicated. In this manner, the degree of control action taken to counter windshield fogging is modulated according to fog probability. Beginning gradually, the control actions are increased with the severity of anticipated fogging condition. At the extreme, the actions taken are equivalent to the best countermeasures possible (short of rolling down the windows).

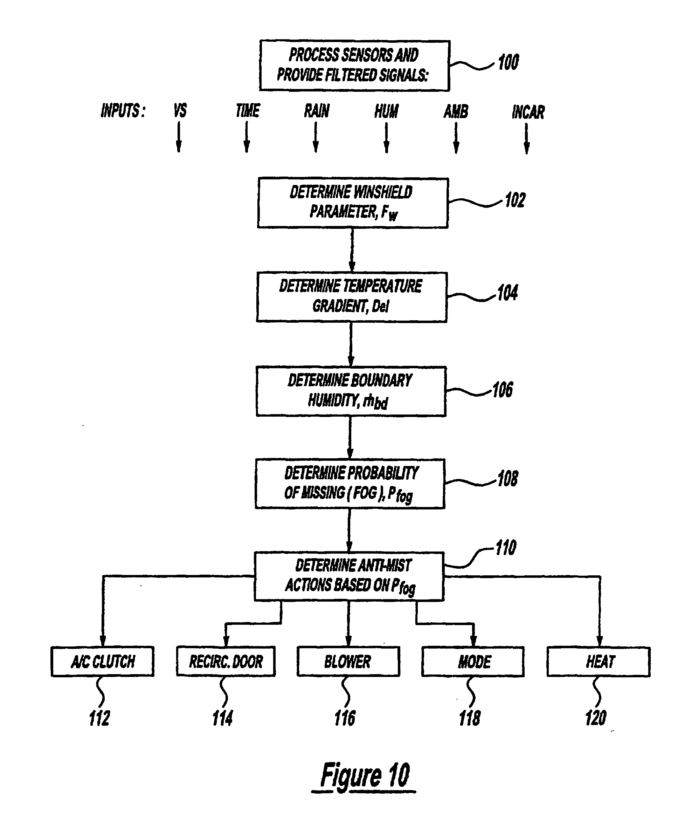

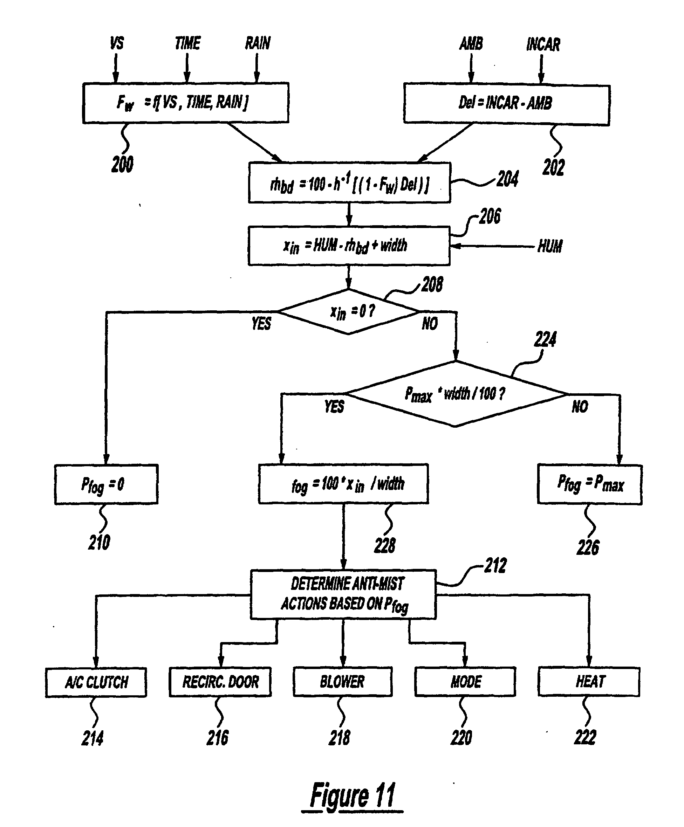

Referring to FIGS. 10 and 11, a method, according to the present invention, of determining windshield fog boundary is shown. In general, the theoretical expression of the fog boundary is based on a physical model and separates vehicle-specific variability from dependence on the properties of moist air, which greatly simplifies the process of calibration of an auto-demist strategy and the parameterization of that calibration. The method calculates the fog boundary based on the vehicle-specific parameter $F_w$ that can be assumed to be constant or can be determined to vary according to functions of other relevant variables such as vehicle speed, time since key-off, time since key-on, rain intensity, etc. During transient conditions, the vehicle-specific parameter $F_w$ would vary with time. Given the fog boundary, the method implements control actions appropriate to the situation to avoid fogging of the windshield 45. The method also determines the appropriate control actions to take to avoid fogging given that a rain condition has been determined from a rain sensor or by processing wiper signals. The method uses cabin humidity from a humidity sensor and modifies the control actions based on the presence of rain. It should be appreciated that the method is carried out on the electronic controller 40.

As illustrated in FIG. 10, the method begins in block 100 and processes signals from the sensors and provides filtered signals of vehicle speed (vs), time (t), rain ($x_{in}$), humidity (hum), ambient temperature ($T_{amb}$) and interior or in-car temperature ($T_{in}$). The method advances from block 100 to block 102 and determines $F_w$ either from a look-up table stored in memory or as an empirically or model determined explicit function of vehicle speed, time, and/or rain intensity. From block 102, the method advances to block 104 and determines a temperature difference, Del, equal to $T_{in}$ minus $T_{amb}$. From block 104, the method advances to block 106 and determines the boundary humidity $rh_{bd}$ according to a look-up table stored in memory (as known in the art) or by an equation as illustrated in FIG. 11. The method then advances to block 108 and determines probability of misting (fog)($P_{fog}$) according to a look-up table stored in memory or the equation in FIG. 11. The method then advances to block 110 and determines anti-fog actions based on $P_{fog}$. The method advances to one or more blocks 112,114,116,118,120 for activating the A/C clutch, recirculation door 28, blower 30, mode and heat based on the anti-fog action determined in block 110. The method then ends.

Referring to FIG. 11, the flow of calculations for the method of FIG. 10 is illustrated. The method begins in block 200 and determines $F_w$ as a function of vehicle speed (vs), time, and rain. This determination can be made from a look-up table stored in memory or by functions to fit the graphs illustrated in FIG. 8 and FIG. 9. The method also begins in block 202 and calculates a variable Del equal to $T_{in}$ minus $T_{amb}$. From blocks 200 and 202, the method advances to block 204 and calculates relative humidity $rh_{bd}$ according to ($rh_{bd}$ = rhin) the equation (6). The method then advances to block 206 and calculates a variable $x_{in}$ according to the equation wherein $x_{in}$ equals humidity (HUM) minus the relative humidity $rh_{bd}$ plus a predetermined variable width. The method then advances to diamond 208 and determines whether $x_{in}$ is less than or equal to zero. If so, the method advances to block 210 and sets $P_{fog}$ equal to zero. The method then advances to block 212 and determines anti-fog actions based on $P_{fog}$. The method advances to one or more blocks 214,216,218,220,222 for activating the A/C clutch, recirculation door 28, blower 30, mode and heat based on the anti-fog action determined.

In diamond 208, if $x_{in}$ is greater than zero, the method advances to diamond 224 and determines whether $x_{in}$ is less than $P_{max}$ multiplied by width divided by 100. If not, the method advances to block 226 and sets $P_{fog}$ equal to $P_{max}$. The method then advances to block 212 previously described.

In diamond 224, if $x_{in}$ is less than $P_{max}$ multiplied by width divided by 100, the method advances to block 228 and sets $P_{fog}$ equal to 100 multiplied by $x_{in}$ divided by width. The method then advances to block 212 previously described. The method then ends.

The present invention has been described in an illustrative manner. It is to be understood that the terminology which has been used is intended to be in the nature of words of description rather than of limitation.

Many modifications and variations of the present invention are possible in light of the above teachings. Therefore, within the scope of the appended claims, the present invention may be practiced other than as specifically described.

## Claims

1. A method of preventing windshield fogging by automatically controlling a heating, ventilation and air conditioning (HVAC) system of a vehicle, said method comprising the steps of:

   determining a windshield parameter for the vehicle;
   determining a temperature difference between the vehicle cabin temperature and ambient temperature;
   measuring a relative humidity for incipient fogging in response to the windshield parameter and the temperature difference;

   determining the vehicle cabin relative humidity;
   determining a value of a fogging probability between 0% and a maximum value based on the difference between the vehicle cabin relative humidity and the relative humidity for incipient fogging;
   selecting and determining one or more anti-fogging actions to be taken based on the value of the fogging probability; and
   controlling the HVAC system to perform the determined one or more anti-fogging actions.

2. A method according to claim 1 wherein said step of determining the windshield parameter comprises determining the windshield parameter as a function of vehicle speed, time, and rain occurring.

3. A method according to claim 2 wherein said step of determining the function of rain occurring is based on a signal from a rain sensor or a wiper motor for a predetermined period of time.

4. A method according to any preceding claim wherein said step of determining the relative humidity for incipient fogging comprises calculating relative humidity for incipient fogging based on the windshield parameter ($F_w$) and temperature difference ($T_{in}$-$T_{amb}$).

5. A method according to claim 4 wherein said step of calculating the relative humidity for incipient fogging comprises the equation

$$rh_{bd} = 100 - h^{-1} [(1- F_w) (T_{in} - T_{amb})].$$

6. A method according to any preceding claim wherein the windshield parameter ($F_w$) is constant.

7. A method according to any preceding claim wherein said step of determining the anti-fog actions comprises one or more of: determining whether to adjust blower speed, turn on the air conditioning, change an air distribution mode, adjust a fresh/recirculation air door, or add heat.

## Patentansprüche

1. Verfahren zur Vermeidung von Beschlag auf Windschutzscheiben durch automatische Steuerung eines Heiz-, Lüftungs- und Klimasystems (HVAC) eines Fahrzeuges, wobei besagtes Verfahren folgende Schritte beinhaltet:

   Bestimmen eines Windschutzscheiben-Parameters für das Fahrzeug,
   Bestimmen einer Temperaturdifferenz zwischen der Fahrzeug-Fahrgastraumtemperatur und der Umgebungstemperatur,

Messen einer relativen Luftfeuchtigkeit für einsetzendes Beschlagen anhand der Windschutzscheiben-Parameter und der Temperaturdifferenz;

Bestimmen der relativen Luftfeuchtigkeit im Fahrgastraum des Fahrzeuges;

Bestimmen eines Wertes einer Beschlagwahrscheinlichkeit zwischen 0% und einem Maximalwert anhand der Differenz zwischen der relativen Luftfeuchtigkeit im Fahrzeug-Fahrgastraum und der relativen Luftfeuchtigkeit für einsetzendes Beschlagen;

Wählen und Bestimmen einer oder mehrerer Antibeschlagaktion(en), die jeweils aufgrund des Wertes der Beschlagwahrscheinlichkeit zu ergreifen ist/sind; und

Steuern des HVAC-Systems derart, daß die ermittelte(n) eine oder mehrere Antibeschlagaktion(en) ausgeführt wird/werden.

**2.** Verfahren nach Anspruch 1, worin besagter Schritt der Bestimmung des Windschutzscheiben-Parameters die Bestimmung des Windschutzscheiben-Parameters als Funktion der Fahrzeuggeschwindigkeit, der Zeit und auftretenden Regens beinhaltet.

**3.** Verfahren nach Anspruch 2, worin der Schritt der Bestimmung der Funktion auftretenden Regens auf einem über einen vorgegebenen Zeitraum anhaltenden Signal von einem Regensensor oder Scheibenwischennotor basiert.

**4.** Verfahren nach einem beliebigen der vorangehenden Ansprüche, worin besagter Schritt der Bestimmung der relativen Luftfeuchtigkeit für einsetzendes Beschlagen beinhaltet, daß die relative Luftfeuchtigkeit für einsetzendes Beschlagen auf der Grundlage der Windschutzscheiben-Parameter ($F_w$) und der Temperaturdifferenz ($T_{in} - T_{amb}$) berechnet wird.

**5.** Verfahren nach Anspruch 4, worin besagter Schritt der Berechnung der relativen Luftfeuchtigkeit für einsetzendes Beschlagen folgende Gleichung beinhaltet:

$$rh_{bd} = 100 - h^{-1}[(1-F_w)(T_{in} - T_{amb})].$$

**6.** Verfahren nach einem beliebigen der vorangehenden Ansprüche, worin der Windschutzscheiben-Parameter ($F_w$) konstant ist.

**7.** Verfahren nach einem beliebigen der vorangehenden Ansprüche, worin besagter Schritt der Bestimmung der Antibeschlagaktionen eine oder mehrere der folgenden Schnitte beinhaltet: Bestimmen, ob die Gebläsedrehzahl anzupassen ist, die Klimaanlage einzuschalten, die Luftverteilungsart zu ändern, die Frischluft-/ Umwälzluft-Mischklappe zu verstellen, oder Wärme zuzuführen ist.

**Revendications**

**1.** Procédé consistant à empêcher qu'un pare-brise ne s'embue en commandant automatiquement un système de conditionnement de chauffage, de ventilation et d'air (HVAC) d'un véhicule, ledit procédé comprenant les étapes consistant à :

déterminer un paramètre de pare-brise pour le véhicule,
déterminer une différence de température entre la température de l'habitacle du véhicule et la température ambiante,
mesurer une humidité relative pour une formation de buée naissante en réponse au paramètre du pare-brise et à la différence de température,
déterminer l'humidité relative de l'habitacle du véhicule,
déterminer une valeur d'une probabilité de formation de buée entre 0 % et une valeur maximum d'après la différence entre l'humidité relative de l'habitacle du véhicule et l'humidité relative pour une formation de buée naissante,
sélectionner et déterminer une ou plusieurs actions anti-buée à entreprendre d'après la valeur de la probabilité de formation de buée, et
commander le système HVAC pour exécuter la ou les actions anti-buée déterminées.

**2.** Procédé selon la revendication 1, dans lequel ladite étape de détermination du paramètre de pare-brise comprend la détermination du paramètre de pare-brise en fonction de la vitesse du véhicule, du temps et de l'occurrence de pluie.

**3.** Procédé selon la revendication 2, dans lequel ladite étape de détermination de la fonction de l'occurrence de pluie est fondée sur un signal provenant d'un capteur de pluie ou d'un moteur d'essuie-glace pendant une durée prédéterminée.

**4.** Procédé selon l'une quelconque des revendications précédentes, dans lequel ladite étape de détermination de l'humidité relative pour la formation de buée naissante comprend le calcul de l'humidité relative pour la formation de buée naissante sur la base du paramètre de pare-brise ($F_w$) et de la différence de température ($T_{in} - T_{amb}$).

5. Procédé selon la revendication 4, dans lequel ladite étape de calcul de l'humidité relative pour la formation de buée naissante comprend l'équation

$$rh_{bd} = 100 - h^{-1} [(1 - F_w)(T_{in} - T_{amb})].$$

6. Procédé selon l'une quelconque des revendications précédentes, dans lequel le paramètre de pare-brise ($F_w$) est constant.

7. Procédé selon l'une quelconque des revendications précédentes, dans lequel ladite étape de détermination des actions anti-buée comprend un ou plusieurs des éléments consistant à : déterminer s'il faut régler la vitesse du ventilateur, activer le conditionnement d'air, modifier un mode de distribution d'air, régler une grille d'air frais/de recirculation ou ajouter de la chaleur.

TO
DEFROSTER

OUTSIDE AIR

RECIRC AIR

TO FLOOR

LEFT SIDE
DEMISTER AIR

TO L AND RIGHT
INSTRUMENT
PANEL REGISTERS

RIGHT SIDE
DEMISTER AIR

TO CENTER
INSTRUMENT
PANEL REGISTERS

_Figure 1_

EP 1 112 871 B1

VEHICLE SPEED

INCAR     TEMP

AMBIENT TEMP

ENGINE COOLANT TEMP

SUNLOAD

SET PAINT TEMP

RAIN

INTERIOR

CONDITIONING     42

SCALED IN

40

SCALED OUT

44

HARDCORE CONTROLLER

BLOWER

26

BLEND DOOR

VACUUM OR ELECTRIC DOORS

22, 24, 28

*Figure 2*

_Figure 3_

Plot of g for various Tin
(data from eqn. 1.8.25, ASHRAE brochure on Psychrooetry)

_Figure 4_

Fog Boundary for Various Fw's

Figure 5

Control action taken. based on proximity to fog
boundary (represented in fog probability)

Figure 6

### Transient Depression of the fog Boundary

*Figure 7*

### Function for $F_W$ Transicent

*Figure 8*

**Worst Case Fw vs. Vehicle Speed**

*vehicle speed - kph*

## Figure 9

EP 1 112 871 B1

PROCESS SENSORS AND
PROVIDE FILTERED SIGNALS: — 100

INPUTS :   VS   TIME   RAIN   HUM   AMB   INCAR

DETERMINE WINSHIELD
PARAMETER, $F_W$ — 102

DETERMINE TEMPERATURE
GRADIENT, Del — 104

DETERMINE BOUNDARY
HUMIDITY, $rh_{bd}$ — 106

DETERMINE PROBABILITY
OF MISSING ( FOG ), $P_{fog}$ — 108

DETERMINE ANTI-MIST — 110
ACTIONS BASED ON $P_{fog}$

A/C CLUTCH | RECIRC. DOOR | BLOWER | MODE | HEAT

112 | 114 | 116 | 118 | 120

_Figure 10_

16

*Figure 11*